# EUROPEAN PATENT APPLICATION

(11) **EP 3 527 278 A1**
(43) Date of publication of application: **21.08.2019**
(21) Application number: 19157952.3
(22) Date of filing: 19.02.2019
(51) Int. Cl.: B01D 35/02, B01D 24/14, B01D 29/41, B01D 29/58, C02F 1/00, C02F 1/28, E04H 4/12, C02F 103/42

(54) **FILTRATION DEVICE**

(30) Priority: 19.02.2018 ES 201830213 U
(71) Applicant: Diasa Industrial, S.A., 26500 Calahorra (ES)
(72) Inventor: MACIAS GALLEGO, Carlos, 26500 CALAHORRA (LA RIOJA) (ES)
(74) Representative: Maslanka Kubik, Dorota Irena

(57) **Abstract**

The present invention refers to a filtration device comprisinga casing (10) having a fluid-to-be-filtered inlet (12) and a filtered fluid outlet (14);a separator (18) splitting the inside of the casing (10) into a first cavity and a second cavity;at least one filter holder element (20) arranged inside the first cavity in which there are housed a plurality of filtration pellets (22); and an adsorbent material bed (24) housed in the second cavity.

## Description

### Field of the Invention

The present invention generally relates to the field of filtration, and more specifically to the filtration of water for the separation of isocyanuric acid.

### Background of the Invention

Products known today in the field of swimming pool water filtration are generally divided into three main categories according to their operating principle: granular bed filters, diatom filters, and cartridge filters.

Granular bed filters consist of a vessel of a variable volume proportional to the flow rate to be filtered, an inlet pipe, a collector with a variable number of nozzles connected to the filtered water outlet pipe, a granulated or fibrous material filter bed, and a backwash discharge pipe. Silica sand and ground glass are among the most widely used filter beds. According to the operating principle of filters of this type, the water to be filtered enters the vessel, passes through the granulated material bed having a certain height, and during the travel thereof suspended solid material gradually settles, being retained on the surface and reaching a certain depth of the granulated material bed. Once it has gone through the bed, the water reaches the nozzles, which have the dual function of retaining the material from the bed and allowing the filtered water through, to finally pass into the collector and to the outlet pipe as filtered water. The filter works in these conditions until the retained amount of solids causes an increase in differential pressure in the filter above a given value, at which time a backwashing is performed, in which the water follows a path that is the reverse of that previously described, causing the bed to expand and the solids retained therein to be expelled through the backwash discharge pipe.

The drawback of these granular bed filters is that the filter bed material cannot have a grain size distribution less than 130 µm, because in this case it would go through the nozzles, fouling the filtered water, so the retention capacity is limited to particles of several tens of microns. This means that the retention size of this filtration medium is between 40 and 50 µm, where solids smaller than this size can pass through the bed, causing the water to be cloudy.

The diatom filter consists of a vessel containing a series of panels which support a polypropylene mesh which serves as a support for the diatomaceous earth. This is added to the water or liquid to be filtered and as the mixture goes through the panels, the liquid passes and the diatoms are retained therein, forming a filter layer. Filtration with diatoms provides higher quality since it can retain solids of 3 to 5 µm, giving the filtered liquid a sparkling appearance. However, backwashing must be carried out more frequently, with part of the diatoms being lost in said backwashing. For example, in the case of swimming pools, the bed is usually renewed in its entirety once a year, so this filtration is more expensive than the one described previously.

Cartridge filters consist of a sheet of filtration medium, generally of a cellulose derivative or of a plastic polymer, which is pleated and inserted in a cylindrical support defining a filter cartridge. In this system, the water passes through the filter sheet, having a specific particle retention size, with the suspended solids that are larger than the retention size of the sheet (usually between 20 and 25 nominal µm) being retained on the surface thereof. The retained solids tend to block the filter over time, so the pressure of the filter increases and backwashing is required to recover filtration capacity. After each backwashing, there are some solids that are irreversibly retained in the filter sheet because given that it is a fixed matrix, it cannot expand, with the cleaning of solids being less effective than in a granular bed filter. This causes filters of this type to have a relatively short service life.

Therefore, there is still a need in the art for a filtration device which combines the advantages of the systems known up until now, eliminating the drawbacks of low retention capacity of the granulated bed filters, the cost and laborious nature of diatom filters, and the short service life of cartridge filters.

### Summary of the Invention

To solve the problems of the prior art, the present invention discloses a filtration device comprising:
- a casing having a fluid-to-be-filtered inlet and a filtered fluid outlet;
- a separator splitting the inside of the casing into a first cavity and a second cavity;
- at least one filter holder element arranged inside the first cavity in which there are housed a plurality of filtration pellets; and
- an adsorbent material bed housed in the second cavity.

### Brief Description of the Drawings

The present invention will be better understood in reference to the following drawings illustrating a preferred embodiment thereof, which is provided by way of example and should not be interpreted as being limiting of the invention in any way:
Figure 1 shows a section view of the filtration device according to the preferred embodiment of the present invention.
Figure 2 shows a top view of a filter holder element according to the preferred embodiment of the present invention.
Figure 3 shows an enlarged section view of a filter holder element according to the preferred embodiment of the present invention.

### Detailed Description of the Preferred Embodiments

As mentioned above, the present invention discloses a filtration device providing two-stage filtration in a single device, combining in single device the advantages of granulated bed, diatom, and cartridge filtration.

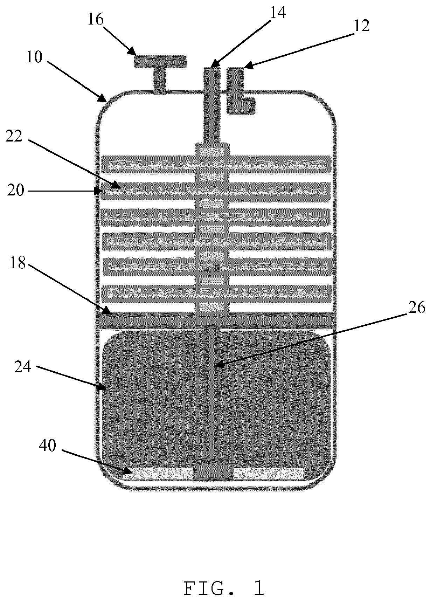

As can be seen in Figure 1, the device according to the preferred embodiment comprises a casing (10) having a fluid-to-be-filtered inlet (12) and a filtered fluid outlet (14), as well as a purge and pressure gauge assembly (16). In the embodiment that is shown, the casing (10) has a substantially cylindrical shape, with both the inlet (12) and the outlet (14) being in the upper part of the casing (10).

A separator (18) splits the inside of the casing (10) into a first cavity (above the separator (18)) and a second cavity (below the separator (18)).

In the first cavity there is arranged a plurality of disc-shaped filter holder elements (20) in which there is housed a plurality of filtration pellets (22) which will be described in detail hereinbelow.

An adsorbent material bed (24) is arranged in the second cavity.

The device further comprises a central outlet tube (26) connecting the second cavity with the outlet (14). The fluid to be filtered thereby enters the filtration device through the inlet (12), flows from the first cavity to the second cavity, passing through the filtration pellets (22) of the first cavity and the adsorbent material bed (24) of the second cavity, reaches the central outlet tube (26) through nozzles (40), and flows upwards through said tube to the outlet (14).

As can be seen, in this case the filter holder elements (20) are arranged by way of discs around the central outlet tube (26). The separator (18) is also arranged by way of a disc around said central outlet tube (26), such that it separates the first cavity from the second cavity in a leak-tight manner except for a central area of the separator in which a gap (passage) is defined between the central outlet tube (26) and the separator (18), through which the filtered fluid can circulate from the first cavity to the second cavity.

The filtration pellets (22) are compact rigid pellets of a sintered material of siliceous or metallic origin, and with a controlled porosity. Said filtration pellets (22) retain solid materials of a size greater than 3 µm, and more preferably of a size greater than 1 µm. More specifically, said filtration pellets (22) are preferably of a material selected from the group consisting of sintered steel fiber, sintered silica, sintered steel powder, cellulose fiber, pressed polypropylene fiber, glass fiber, polyethersulfone (PES), poly(vinylidene fluoride) (PVDF), and polytetrafluoroethylene (PTFE).

The adsorbent material bed (24) is preferably activated carbon, for example, with a specific surface area of 900-1000 m²/g, a grain size distribution of 12x40 or 20x40 mesh, and a bed density of 450 kg/m². This adsorbent bed (24) allows removing contaminants in dissolution in the fluid which cannot be removed by filtration.

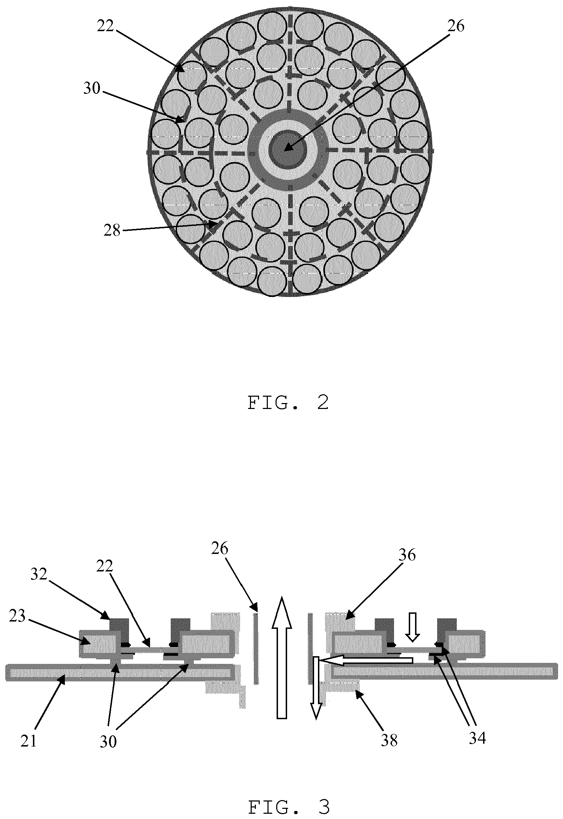

Figures 2 and 3 show a filter holder element (20) in which there is located a plurality of filtration pellets (22). The filter holder element (20) has a lower support plate (21) and an upper support plate (23). The filter holder element (20) has a series of radial ribs (28) and circular ribs (30). The radial ribs (28) can be continuous or discontinuous, whereas the circular ribs (30) are discontinuous, especially in the lowermost filter holder element (20), such that the filtered fluid can run into the center of the cavity where the passage to the second cavity is located (between the central outlet tube (26) and the separator (18)).

Each filtration pellet (22) is held by fixing elements (32) as well as by sealing gaskets (34).

According to a preferred embodiment, the filter holder element (20) comprises the lower support plate (21) with several hollows for receiving the filtration pellets (22) provided with sealing gasket (34), the filtration pellets (22) as such, and the upper support plate (23) with sealing gasket (34) which presses the filtration pellets (22) onto the lower support plate (21) and gives leak-tightness to the system.

The different filter holder elements (20) are attached to one another by means of an upper connector element (36) and lower connector element (38). The lower connector element (38) of a filter holder element (20) is connected in a leak-tight manner with the upper connector element (36) of the immediately lower filter holder element (20), and so on and so forth.

Though not shown in the drawings, the device may further comprise a granular or fibril filtration material which fills in the space (the free space of the upper cavity) between the filter holder elements (20) and acts by way of a pre-filter bed. This pre-filter bed retains solids of a size greater than 40-50 µm such that the fluid reaches the filtration pellets free of some of the initial solids, in which fine filtration is performed. This material of the pre-filter bed can be, for example, sand, ground glass, zeolites or cotton fibers. For example, according to one embodiment siliceous sand with a size of 0.4-0.8 mm is used. According to another embodiment, cotton fiber with a fiber diameter in the range of 50 to 100 µm is used.

When the various filter elements are saturated with particles retained from the fluid to be filtered (which increases pressure in the device and reduces filtration efficiency), backwashing can be performed for the purpose of regenerating the filter elements by increasing their filtration efficiency and service life. In this case, the reverse path with respect to that previously described would be followed, causing detachment of the particles retained in the filter elements.

Although a detailed description of preferred embodiments of the present invention has been provided, one skilled in the art will understand that modifications and variations can be applied to said embodiments without departing from the scope of protection defined exclusively by the attached claims.

## Claims

1. A filtration device comprising:
- a casing (10) having a fluid-to-be-filtered inlet (12) and a filtered fluid outlet (14);
- a separator (18) splitting the inside of the casing (10) into a first cavity and a second cavity;
- at least one filter holder element (20) arranged inside the first cavity in which there are housed a plurality of filtration pellets (22); and
- an adsorbent material bed (24) housed in the second cavity.

2. The device according to claim 1, **characterized in that** it comprises a purge and pressure gauge assembly (16).

3. The device according to any of the preceding claims, **characterized in that** the casing (10) has a cylindrical shape, with the inlet (12) and the outlet (14) being in the first cavity of the casing, wherein the fluid to be filtered flows from the first cavity to the second cavity, passing through the filtration pellets (22) and the adsorbent material bed (24), the device further comprising a central outlet tube (26) through which the filtered fluid flows from the second cavity to the outlet (14) in the first cavity, with the filter holder elements (20) of the first cavity being arranged by way of discs around the central outlet tube (26).

4. The device according to any of the preceding claims, **characterized in that** it comprises a plurality of said filter holder elements (20) as well as filtration material by way of a pre-filter bed between said filter holder elements.

5. The device according to claim 4, **characterized in that** the pre-filter bed retains solids of a size greater than 40-50 µm.

6. The device according to any of claims 4 to 5, **characterized in that** the pre-filter bed is of a material selected from the group consisting of granular materials such as sand, ground glass, zeolites, and fibril materials such as cotton fiber.

7. The device according to any of the preceding claims, **characterized in that** the separator (18) is arranged by way of a disc around the central outlet tube (26) such that it separates the first cavity from the second cavity in a leak-tight manner, and comprises a central area with a gap between the central outlet tube (26) and the separator (18), such that it allows the filtered fluid to circulate from the first cavity to the second cavity.

8. The device according to any of the preceding claims, **characterized in that** the filtration pellets (22) retain solids greater than 1 µm.

9. The device according to any of the preceding claims, **characterized in that** the filtration pellets (22) are compact rigid pellets of a material selected from the group comprising siliceous and metallic materials.

10. The device according to any of the preceding claims, **characterized in that** the filtration pellets (22) are of a material selected from the group comprising sintered steel fiber, sintered silica, sintered steel powder, cellulose fiber, pressed polypropylene fiber, glass fiber, polyethersulfone (PES), poly(vinylidene fluoride) (PVDF), and polytetrafluoroethylene (PTFE).

11. The device according to any of the preceding claims, **characterized in that** the adsorbent material (24) is activated carbon.
